# EUROPEAN PATENT APPLICATION

(11) **EP 4 842 094 A1**
(43) Date of publication of application: **18.11.2026**
(21) Application number: 25899444.1
(22) Date of filing: 23.09.2025
(51) Int. Cl.: H04W 68/00, H04W 4/029

(54) **USER REGISTRATION METHOD AND SYSTEM**

(30) Priority: 14.03.2025 CN 202510308812
(71) Applicant: China Satellite Network Innovation Co., Ltd, Beijing 100029 (CN)
(72) Inventor: MEI, Chengli, Beijing 100029 (CN); SUN, Yuexin, Beijing 100029 (CN); YAO, Dingyi, Beijing 100029 (CN); ZHOU, Changsheng, Beijing 100029 (CN)
(74) Representative: Dehns Germany Partnerschaft mbB
(86) International application number: PCT/CN2025/123352
(87) International publication number: WO 2026/188772

(57) **Abstract**

The embodiments of the present disclosure provide a method and a system for registering a user, which are applied to a base station. The method includes: receiving a user location; determining a first tracking area code according to the user location; and sending the first tracking area code to a core network. The present disclosure solves the problem in the related art that a terminal may not be paged due to movement of a base station in a non-terrestrial network, thereby achieving the effect of enabling paging of the terminal in the non-terrestrial network by registering the terminal on the basis of a user location.

## Description

### Cross-Reference to Related Application

The present disclosure claims priority to Chinese Patent Application No. 202510308812.0, filed with the Chinese Patent Office on March 14, 2025 and entitled "Method and System for Registering User", which is incorporated herein by reference in its entirety.

### Technical Field

The embodiments of the present disclosure relate to the field of communications, and in particular, to method and system for registering a user.

### Background

There are multiple schemes for implementing the satellite Internet technology, which are classified into a transparent mode and a regenerative mode according to the satellite payload. For networking in the satellite transparent mode, as the network and the base station are still deployed on the ground, the current terrestrial registration method continues to apply. For networking in the regenerative mode, as the high-speed movement of the base station will lead to complex networking between the satellite-borne base station and the terrestrial network, there is currently no explicit technical solution in the industry.

When the base station is in a high-speed movement, in a case where the base station is bound to a terrestrial geographical location, a Tracking Area Identity (TAI) to which a user belongs will change frequently, and user equipment may frequently trigger Tracking Area Update (TAU), potentially in massive batches simultaneously, leading to a signaling storm. Furthermore, in a case where User Equipment (UE) registers via a certain base station, the base station may have flown out of a user service area within minutes, resulting in the inability to page the user. This obviously fails to meet network design requirements.

So far, no effective solution has been proposed for the described problem.

### Summary

The embodiments of the present disclosure provide method and system for registering a user, so as to at least solve the problem in the related art that user equipment may not be paged due to movement of a base station in a non-terrestrial network.

According to an embodiment of the present disclosure, provided is a method for registering a user, which is applied to a base station. The method includes: receiving a user location; determining a first tracking area code according to the user location; and sending the first tracking area code to a core network.

**In** an exemplary embodiment, the determining a first tracking area code according to the user location includes: determining a first bit according to latitude of the user location; determining a second bit according to longitude of the user location; wherein the first tracking area code includes: the first bit and the second bit.

**In** an exemplary embodiment, the determining a first tracking area code according to the user location further includes: determining a third bit according to orientation of the user location, wherein the first tracking area code further includes the third bit.

**In** an exemplary embodiment, the sending the first tracking area code to a core network includes: in a case of releasing of a connection with the base station, sending the first tracking area code to the core network.

According to another embodiment of the present disclosure, provided is a method for registering a user, which is applied to user equipment. The method includes: sending a user location to a base station in a case where a preset condition is satisfied; wherein the user location is used to determine a first tracking area code.

**In** an exemplary embodiment, the sending a user location to a base station in a case where a preset condition is satisfied includes: sending the user location to the base station during registration with a core network; or sending the user location to the base station in a case of moving out of a target area.

**In** an exemplary embodiment, before the sending the user location to the base station in a case of moving out of a target area, the method further includes: acquiring a registration update threshold from the core network; and determining the target area according to the registration update threshold.

**In** an exemplary embodiment, the determining the target area according to the registration update threshold includes: determining the target area as an area with the user location as a center and the registration update threshold as a radius.

**In** an exemplary embodiment, the acquiring a registration update threshold from the core network includes: receiving a tracking area identity list from the core network; and acquiring the registration update threshold from the tracking area identity list, wherein the registration update threshold is carried in a second tracking area code of the tracking area identity list.

According to another embodiment of the present disclosure, provided is a system for registering a user. The system includes: user equipment, which is configured to send a user location to a base station in a case where a preset condition is satisfied; and a base station, which is configured to determine a first tracking area code according to the user location, and send the first tracking area code to a core network.

According to still another embodiment of the present disclosure, further provided is a computer-readable storage medium. The computer-readable storage medium stores a computer program, wherein the computer program implements the steps of the method according to any one of the described embodiments when being executed by a processor.

According to still another embodiment of the present disclosure, further provided is an electronic device. The electronic device includes a memory and a processor, wherein the memory stores a computer program, and the processor is configured to run the computer program so as to execute the steps in any one of the described method embodiments.

According to still another embodiment of the present disclosure, further provided is a computer program product. The computer program product includes a computer program which, when executed by a processor, implements the steps of the method according to any one of the described embodiments.

According to still another embodiment of the present disclosure, further provided is a computer program product. The computer program product includes computer instructions which, when executed by a processor, implement the steps of the method according to any one of the described embodiments.

In the present disclosure, as a base station receives a user location, determines a first tracking area code according to the user location, and sends the first tracking area code to a core network, the registration may be performed on the basis of the user location. The present disclosure may solve the problem in the related art that user equipment may not be paged due to movement of a base station in a non-terrestrial network, thereby achieving the effect of enabling paging of the user equipment in the non-terrestrial network.

### Brief Description of the Drawings

Fig. 1 is a schematic diagram of a non-terrestrial network according to an embodiment of the present disclosure;
Fig. 2 is a diagram of a TAI scheme where base stations are bound to geographical locations;
Fig. 3 is a flowchart of user registration;
Fig. 4 is a schematic diagram of updating a base station tracking area;
Fig. 5 is a flowchart of a method for registering a user according to an embodiment of the present disclosure;
Fig. 6 is a schematic diagram of a base station reporting a user location according to an embodiment of the present disclosure;
Fig. 7 is a schematic diagram of a base station side managing UEs and Tracking Area Codes (TAC) according to an embodiment of the present disclosure;
Fig. 8 is a schematic diagram of a format of a first tracking area code according to an embodiment of the present disclosure;
Fig. 9 is a schematic diagram of longitude and latitude encoding according to an embodiment of the present disclosure;
Fig. 10 is a schematic diagram of Tracking Area Identities (TAI) according to an embodiment of the present disclosure;
Fig. 11 is a schematic diagram of initiating a TAU on the basis of a change in user location according to an embodiment of the present disclosure;
Fig. 12 is a schematic diagram of a TAI list according to an embodiment of the present disclosure;
Fig. 13 is a flowchart of registration according to an embodiment of the present disclosure;
Fig. 14 is a flowchart of connection release according to an embodiment of the present disclosure;
Fig. 15 is a flowchart of registration update based on a user location according to an embodiment of the present disclosure.

### Detailed Description of the Embodiments

The embodiments of the present disclosure will be described below in detail with reference to the drawings and in conjunction with the embodiments.

It should be noted that, terms such as "first" and "second" in the description and the claims of the present disclosure and the described drawings are used to distinguish similar objects, but are not necessarily used to describe a specific sequence or order.

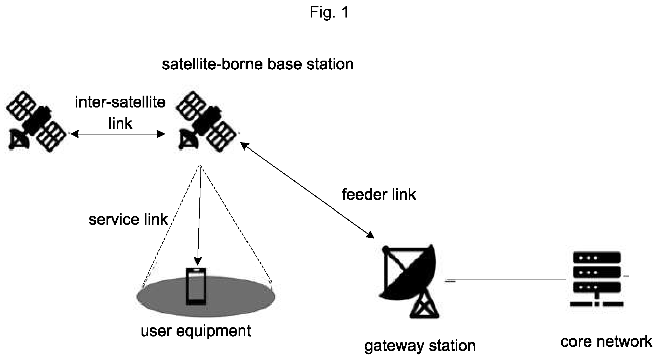

Fig. 1 is a schematic diagram of a non-terrestrial network according to an embodiment of the present disclosure. As shown in Fig. 1, a service link is a wireless link between a user equipment and a satellite-borne base station (a base station deployed on a satellite), a feeder link is a wireless link between the satellite-borne base station and a gateway station, and an inter-satellite link is a wireless link between satellite-borne base stations. The satellite-borne base station provides a connection function between the service link and the feeder link.

The major difference between a non-terrestrial network and a terrestrial network lies in that, in addition to user equipment mobility, a base station deployed on a satellite also moves at a high speed. The high-speed movement of a satellite will cause the relationships between the satellite and user equipment, the satellite and a gateway station, and the satellite and a core network to change continuously. Therefore, a non-terrestrial network is a network with a high dynamic network topology structure.

There are multiple schemes for implementing the satellite Internet technology, which are classified into a transparent mode and a regenerative mode according to the satellite payload. The former mainly achieves conversion of radio frequency information via a satellite, and the latter achieves deployment of part of or the entire base station on the satellite, and may even include on-satellite deployment of core network elements. The regenerative mode has the characteristics of strong service processing capability, low delay and flexible networking.

The 5G registration management is the first step of the 5G network access and management. It is used for performing registration and deregistration between User Equipment (UE) and a network, and establishing a user context in the network. For networking in the satellite transparent mode, as the network and the base station are still deployed on the ground, the 3GPP international standard organization has adopted the current terrestrial registration method. For networking in the regenerative mode, as the high-speed movement (for example, 7.8 km per second) of the base station will lead to complex networking between the satellite-borne base station and the terrestrial network, there is currently no explicit technical solution across standard organizations in the industry.

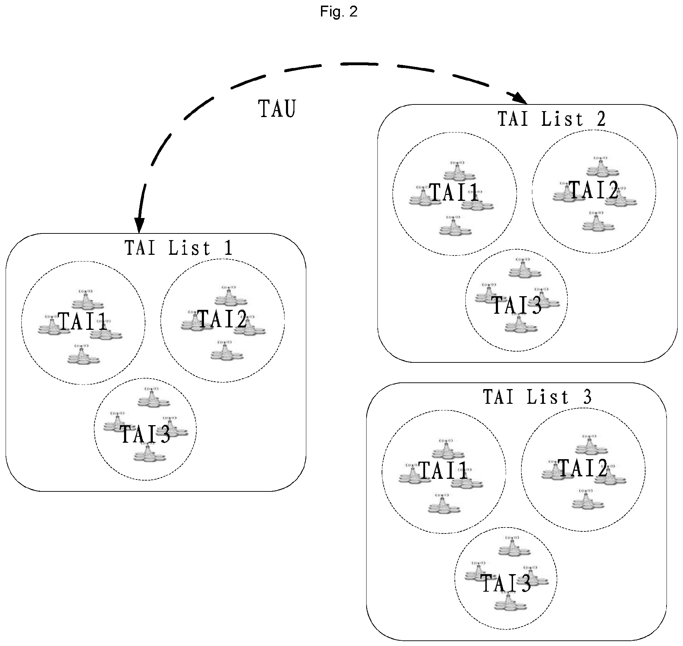

The existing transparent mode registration adopts a Tracking Area Update (TAU) scheme of a Tracking Area Identity (TAI) based on a 5G New Radio (NR). Fig. 2 is a diagram of a TAI scheme where base stations are bound to geographical locations. On the basis that base stations have fixed geographical locations and are bound to the geographical locations, a group of base stations correspond to one TAI. As shown in Fig. 2, TAI1 in a TAI List1 corresponds to a group of base stations. In order to reduce paging, a plurality of TAIs form a Tracking Area Identity List (TAI List). User equipment initiates the registration procedure under circumstances such as initial registration, mobility update (TAI change) registration, periodical registration and emergency registration. The TAU is triggered when the TAI List to which the UE belongs changes.

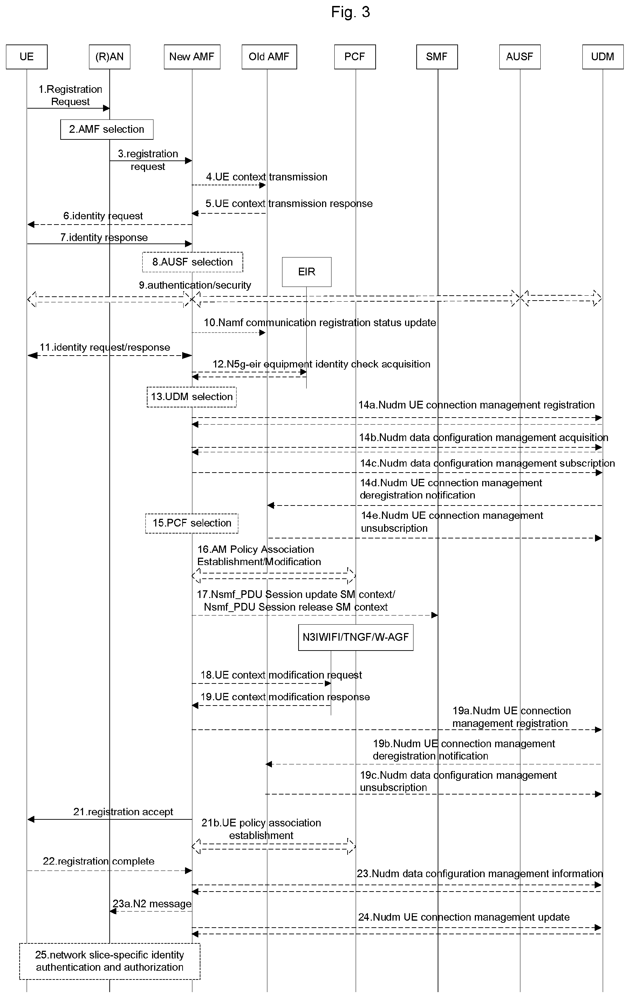

Fig. 3 is a schematic flowchart of user registration, mainly including the following steps:
1. registration request: a user (UE) initiates a registration request to a Radio Access Network (RAN);
2. Access and Mobility Management Function (AMF) selection: the RAN selects an appropriate AMF;
3. registration request: the RAN initiates a registration request to the New AMF;
4. user equipment context transmission: the New AMF initiates a user equipment context transmission request to the Old AMF;
5. user equipment context transmission response: the Old AMF initiates a user equipment context transmission request response to the New AMF;
6. identity request: the New AMF initiates an identity request to the UE to verify the identity of the UE;
7. identity response: the UE initiates an identity request response to the New AMF;
8. Authentication Server Function (AUSF) selection: an AUSF is selected;
9. authentication/security: the New AMF performs authentication and security procedures;
10. Namf communication registration status update: the New AMF initiates Namf communication registration status update to the Old AMF;
11. identity request/response: the New AMF sends an identity response to the UE;
12. N5g-eir equipment identity check acquisition: the New AMF initiates an N5g-eir equipment identity check acquisition request to an Equipment Identity Register (EIR);
13. Unified Data Management (UDM) selection: an appropriate UDM is selected;
14. the AMF interacts with the UDM;
14.a. Network Unified Data Management (Nudm) user equipment connection management registration: the New AMF interacts with the UDM to perform a Nudm user equipment connection management registration task;
14.b. Nudm data configuration management acquisition: the New AMF interacts with the UDM to perform a Nudm data configuration management acquisition task;
14.c. Nudm data configuration management subscription: the New AMF initiates a Nudm data configuration management subscription request to the UDM;
14.d. Nudm user equipment connection management deregistration notification: the UDM initiates a Nudm user equipment connection management deregistration notification to the Old AMF;
14.e. Nudm user equipment connection management deregistration notification: the Old AMF responds to the UDM with Nudm data configuration management unsubscription;
15. Policy Control Function (PCF) selection: an appropriate PCF is selected;
16. establishment/modification of Access and Mobility Management (AM) association: the New AMF interacts with the PCF to perform an AM policy association establishment/modification task;
17. a data transmission session between the AMF and a Session Management Function (SMF) is referred to as Nsmf_PDU Session. The New AMF initiates an Nsmf Protocol Data Unit Session (PDU) update/release SM context request to the SMF;
18. user equipment context modification request: the New AMF initiates a user equipment context modification request to (non-3GPP interWorking Function (N3IWF)/Trusted non-3GPP Gateway Function (TNGF)/Wireline-Access Gateway Function (W-AGF));
19. user equipment context modification response: (non-3GPP interWorking Function (N3IWF)/Trusted non-3GPP Gateway Function (TNGF)/Wireline-Access Gateway Function (W-AGF)) initiates a user equipment context modification response to the New AMF;
19.a. Nudm user equipment connection management registration: the New AMF initiates a Nudm user equipment connection management registration request to the UDM;
19.b. Nudm user equipment connection management deregistration notification: the UDM initiates a Nudm user equipment connection management deregistration notification to the Old AMF;
19.c. Nudm data configuration management unsubscription: the Old AMF initiates a Nudm data configuration management unsubscription request to the UDM;
21. registration accept: the New AMF responds to the UE with registration accept;
21.b. user equipment policy association establishment: the New AMF establishes a user equipment policy association with the PCF;
22. registration complete: the UE responds to the New AMF with registration complete;
23. Nudm data configuration management information: the New AMF exchanges Nudm data configuration management information with the UDM;
23.a. N2 message: the New AMF sends N2 message to the RAN;
24. Nudm user equipment connection management update: the New AMF interacts with the UDM to perform Nudm user equipment connection management update;
25. network slice-specific identity authentication and authorization: the UE, the RAN and the New AMF perform network slice-specific identity authentication and authorization.

In a registration process, a user initiates a registration request, and a Radio Access Network (RAN) selects an appropriate Access and Mobility Management Function (AMF) entity to initiate the registration request. By means of procedures such as selection of an Authentication Server Function (AUSF), an authentication procedure, and security procedure, the UE registers in Unified Data Management (UDM), and completes the registration request. In a case where the UE moves or other situations cause a TAI change of the UE, the UE initiates a TAI update (TAU) procedure to report a current TAI to the network.

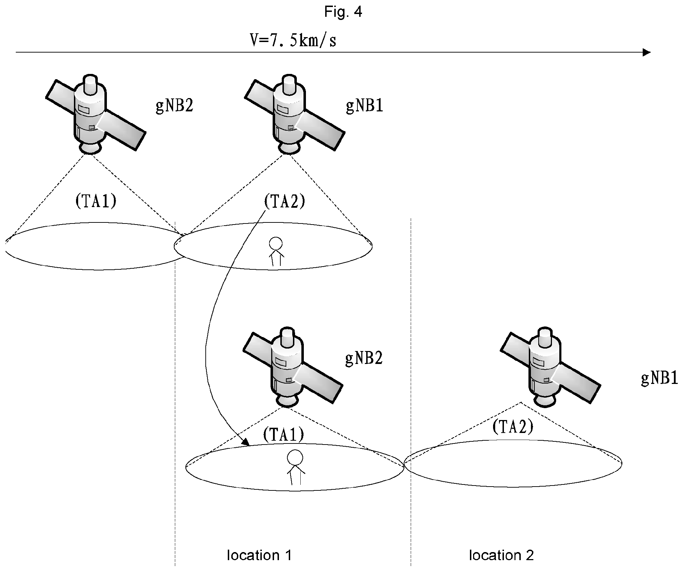

In a regenerative mode of a satellite-borne base station (a base station deployed on a satellite), the base station moves at a high speed and may not be bound to a terrestrial geographical location. Consequently, a TAI to which a user belongs will change frequently, and user equipment may frequently trigger a TAU, potentially in massive batches simultaneously, leading to a signaling storm. Taking Fig. 4 as an example, Fig. 4 is a schematic diagram of updating a base station tracking area. A base station gNB1 and a base station gNB2 are shown in Fig. 4, and a tracking area of the base station gNB1 is TA2, and a tracking area of the base station gNB2 is TA1. With the movement of the base station gNB1 and the base station gNB2, the base station serving the location 1 is updated from the gNB1 to the gNB2, accordingly the tracking area for users at the location 1 is updated from the original tracking area TA2 to the tracking area TA1, triggering TAU. A large number of users at the location 1 triggering the TAU may cause a signaling storm.

Furthermore, in a case where UE registers via a certain base station, the base station may have flown out of a user service area within minutes, resulting in the inability to page the user.

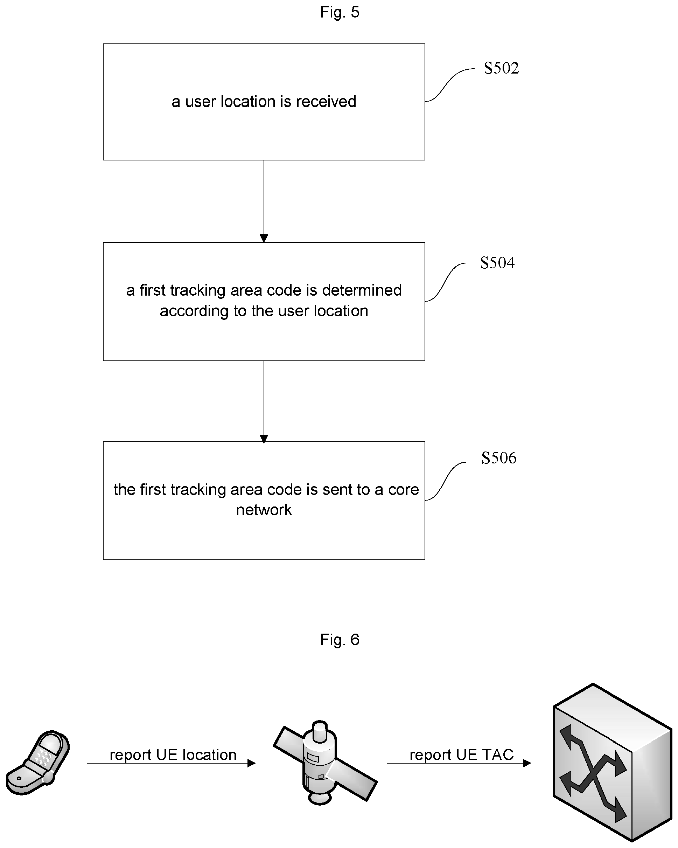

The present embodiment provides a method for registering a user applicable to the described Fig. 1, which is applied to a base station (for example, a satellite-borne base station in Fig. 1, which may also be applied to other mobile base stations, for example, a base station deployed on a mobile platform). Fig. 5 is a flowchart of a method for registering a user according to an embodiment of the present disclosure. As shown in Fig. 5, the procedure includes the following steps:
Step S502: a user location is received;
The user location is a location reported by UE, including longitude and latitude.

Step S504: a first tracking area code is determined according to the user location;
Step S506: the first tracking area code is sent to a core network.

In an exemplary embodiment, a first Tracking Area Code (TAC) registration mechanism based on user location (longitude and latitude) is adopted. As shown in Fig. 6, a UE reports a user location (corresponding to the position in Fig. 6, such as longitude and latitude information) to a base station. The base station converts the user location into a first tracking area code. The base station reports the first tracking area code to a core network. In this way, by adopting a user location-based registration procedure mechanism, the problem of registration in a regenerative mode of a satellite-borne base station is solved, thereby achieving the effect of facilitating user paging.

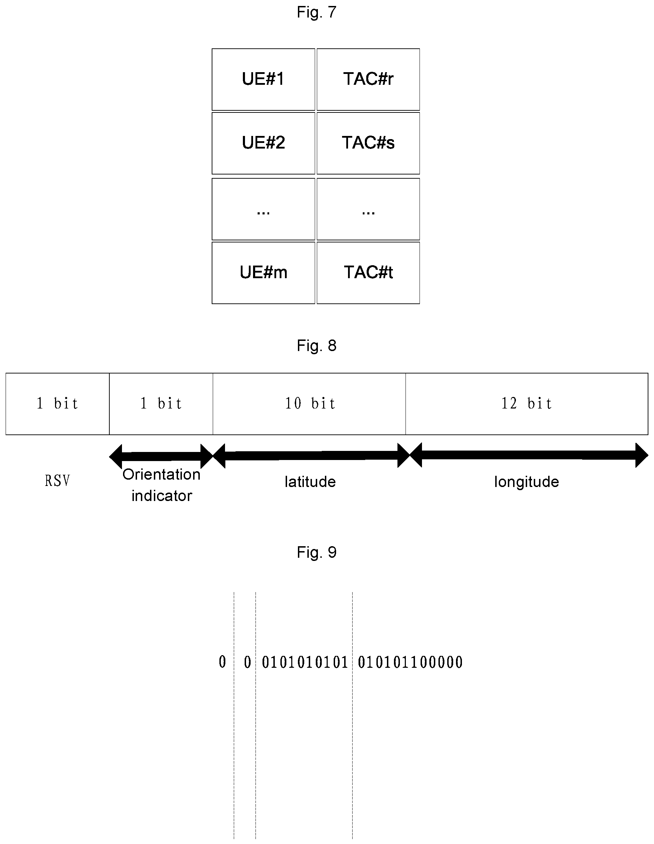

Fig. 7 is a schematic diagram of a base station side managing UE and Tracking Area Codes (TAC). The base station side stores a tracking area code of each UE. The tracking area codes as shown in Fig. 7 include: TAC#r, TAC#s, ... and TAC#t, wherein TAC#r is a tracking area code obtained by converting the longitude and latitude of the UE#1 by the base station, TAC#s is a tracking area code obtained by converting the longitude and latitude of the UE#2 by the base station, and TAC#t is a tracking area code obtained by converting the longitude and latitude of UE#m by the base station. Each tracking area code recorded by the base station side is generated on the basis of the location of the corresponding UE, thereby achieving the effect that the base station implements registration management for a plurality of UE on the basis of the locations of respective UE.

In an exemplary embodiment, the first tracking area code includes: a first bit and a second bit. Specifically, the first bit is determined according to the latitude of the user location; and the second bit is determined according to the longitude of the user location.

In an exemplary embodiment, the first tracking area code further includes: a third bit. Specifically, the third bit is determined according to the orientation of the user location.

Fig. 8 is a schematic diagram of a format of a first tracking area code. Original longitude and latitude information reported by UE and received by a base station is (degreesLongitude-24bit, degreesLatitude-23bit). The base station converts the original longitude and latitude information and fills into 3 octets of the first tracking area code. As shown in Fig. 8, RSV is a reserved 1-bit, and 1-bit orientation indicator is a third bit, indicating the orientation, for example, east longitude, west longitude, south latitude, and north latitude. In Fig. 8, the 10-bit for latitude is a first bit, which is a bit converted from the latitude of the user location, the 12-bit for longitude is a second bit, which is a bit converted from the longitude of the user location.

The following description is given by taking the user location at 30 degrees north latitude, and 121 degrees east longitude as an example:
the latitude is converted into a first bit: (2^23*30)/90=2796202.67, the value of N is 2796202, corresponding to the hexadecimal value 2AAAAA, and corresponding to the binary value 01010101010101010101010 (23bit), representing north latitude;
the longitude is converted into a second bit: (2^24*121)/360=5639008.71, the value of N is 5639008, corresponding to the hexadecimal value 560B60, and corresponding to the binary value 010101100000101101100000 (24 bits), representing east longitude.

The east longitude and the north latitude are in the first quadrant, and after the low bits of the north latitude are removed, the resulting 10-bit value is 0101010101 (corresponding to the first bit), and after the low bits of the east longitude are removed, the resulting 12-bit value is 010101100000 (corresponding to the second bit). The corresponding hexadecimal value is 155560.

The base station fills the converted first bit, second bit and third bit into the corresponding 3 octets in Fig. 8. In the case that the 1-bit orientation indicator represents longitude, the east longitude or the west longitude may be represented by 0 or 1 (assuming that 0 represents east longitude and 1 represents west longitude, the east longitude 121 corresponds to an orientation indicator of 0 in the described example). In the case that the 1-bit orientation indicator represents north and south latitude, the south latitude or the north latitude may be represented by 0 or 1 (assuming that 0 represents south latitude and 1 represents north latitude, the north latitude 30 degrees corresponds to an orientation indicator of 1 in the described example).

Fig. 9 is a schematic diagram of longitude and latitude encoding, wherein from left to right, the first binary 0 is RSV (reserved field), the second binary 0 is orientation (corresponding to the third bit), followed by 0101010101 (10 bits, corresponding to the second bit, used for representing latitude), and finally 010101100000 (12 bits, corresponding to the first bit, used for representing longitude).

In an exemplary embodiment, the base station reports the user location to the core network by means of a TAI.

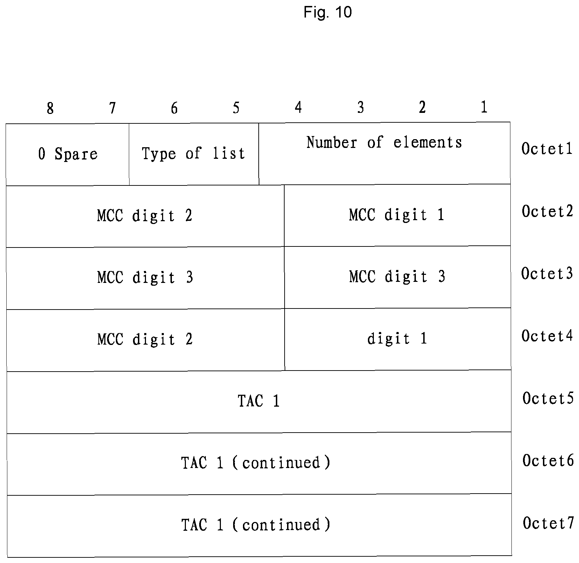

Fig. 10 is a schematic diagram of Tracking Area Identities (TAI), containing the following content: in the first octet (octet1): 1 bit is a spare bit (0 Spare), 2 bits represent the Type of list, and 5 bits represent the Number of elements; in the second octet (octet2): 4 bits represent the Mobile Country Code (MCC) digit 2 (MCC digit2), and 4 bits represent MCC digit1; in the third octet (octet3): 4 bits represent the Mobile Network Code (MNC) digit 3 (MNC digit3), and 4 bits represent MCC digit3; in the fourth octet (octet4): 4 bits represent MNC digit2, and 4 bits represent MNC digit1; the fifth octet (octet5) is TAC1; the sixth octet (octet6) is TAC1 (continued); and the seventh octet is TAC1 (continued).

In the present embodiment, the first tracking area code is filled in the fifth octet TAC1, the sixth octet TAC1 (continued) and the seventh octet TAC1 (continued) of the TAI shown in Fig. 10.

As an optional implementation, in a case of releasing of a connection with the base station, the first tracking area code is sent to the core network. In this way, even if UE registers via a certain base station and the base station may have flown out of a user service area within minutes, since the base station reports a user location to the core network, the UE may be registered on the basis of the user location, thereby achieving the effect of user paging.

According to another embodiment of the present disclosure, provided is a method for registering a user, which is applied to user equipment. The method includes: sending a user location to a base station in a case where a preset condition is satisfied; wherein the user location is used to determine a first tracking area code.

In an exemplary embodiment, sending a user location to a base station in a case where a preset condition is satisfied includes: sending the user location to the base station during registration with a core network; or sending the user location to the base station in a case of moving out of a target area.

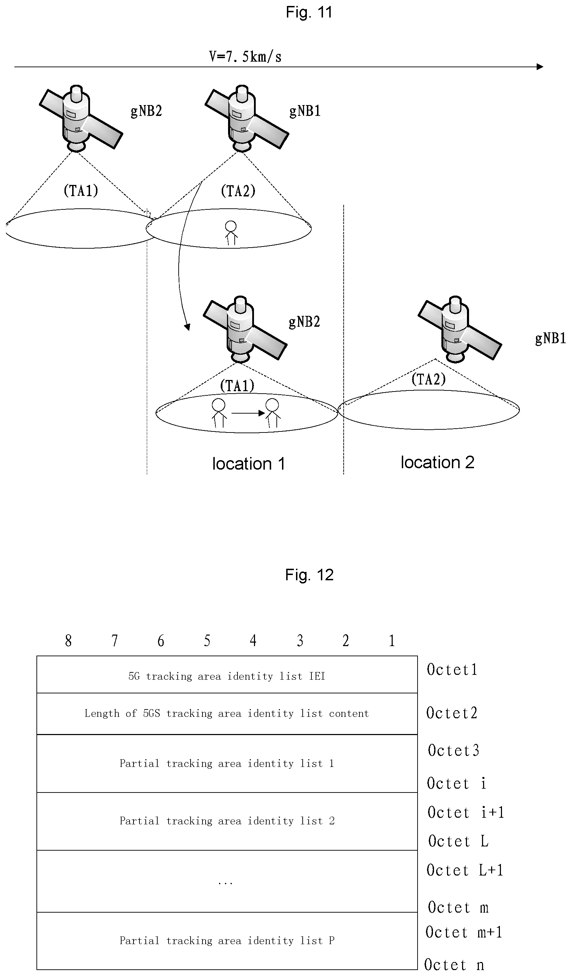

UE sends a user location to a base station, the base station converts the user location reported by the UE into a first tracking area code, and the base station updates the first TAC corresponding to the UE as shown in Fig. 7, wherein the purpose of updating the TAC is to enable a network side to know location area information of the user, thus, during subsequent paging, the core network may determine a target base station serving the UE on the basis of the first TAC corresponding to the UE (the target base station is a mobile base station, for example, a satellite-borne base station), and initiate paging of the user (UE) via the target base station (i.e. the core network knows in which areas to page the user). Due to the existence of UE mobility, as shown in Fig. 11, a TAU is initiated on the basis of a change in user location. In a case where the change in UE location exceeds a certain range (corresponding to a target area, for example, a movement radius of greater than 10 km), the TAU is initiated, and the network side is notified of a new location of the UE. In this way, the present disclosure may achieve the effect that even if the location of the UE changes, the core network can instantly acquire the new location of the UE so as to initiate paging for the user.

In an exemplary embodiment, before the sending the user location to the base station in a case of moving out of a target area, the method further includes: acquiring a registration update threshold from the core network; and determining the target area according to the registration update threshold. Specifically, the target area is determined as an area with the user location as a center and the registration update threshold as a radius.

In an exemplary embodiment, acquiring a registration update threshold from the core network includes: receiving a tracking area identity list from the core network; and acquiring the registration update threshold from the tracking area identity list, wherein the registration update threshold is carried in a second tracking area code of the tracking area identity list.

In order to reduce the number of times a user terminal in an idle status of a wireless connection (RRC_IDLE status) sends location area update messages to a network, paging may only be defined within a physical area, i.e. it is impossible to accurately reach an accurate location, and the registration update threshold will be issued by the core network.

In an exemplary embodiment, the registration update threshold reuses format of the 5G TAI list. Fig. 12 is a schematic diagram of a TAI list, including: a 5G tracking area identity list IEI, a Length of 5GS tracking area identity list content, a Partial tracking area identity list 1, a Partial tracking area identity list 2, ..., and a Partial tracking area identity list p. Each Partial tracking area identity list in the Fig. 12 corresponds to one tracking area identity list.

The tracking area identity list includes the tracking area code identity shown in Fig. 10. In the present embodiment, the fifth octet TAC1, the sixth octet TAC1 (continued) and the seventh octet TAC1 (continued) shown in Fig. 10 are used to fill the registration update threshold, wherein the fifth octet TAC1, the sixth octet TAC1 (continued) and the seventh octet TAC1 (continued) are respectively 1-octet, the registration update threshold is first filled in the seventh octet TAC1 (continued), and in a case where the seventh octet TAC1 (continued) does not have enough bits, the registration update threshold is continuously filled in the sixth octet TAC1 (continued) and the fifth octet TAC1. The fifth octet TAC1, the sixth octet TAC1 (continued) and the seventh octet TAC1 (continued) filled with the registration update threshold are the described second tracking area code.

In consideration of the processing complexity of the base station, the overhead of system message update and the paging capacity, the base station does not issue a TAI list, but the core network issues to the UE a physical area (the target area) for TAU. The physical area for TAU may be represented by a physical area centered at the current location of the UE, that is, the core network needs to issue to the UE a radius of a circle (the registration update threshold DELTA). The UE reports the user location to the base station in a case of determining that it has moved out of the target area. The core network carries the registration update threshold in the second tracking area code (the registration update threshold is filled in the fifth octet TAC1, the sixth octet TAC1 (continued) and the seventh octet TAC1 (continued) shown in Fig. 10), and the core network issues the registration update threshold DELTA to the UE by means of the TAI list. In this way, the number of times a user terminal sends location area update messages to a network may be reduced, thereby achieving the technical effects of lowering the processing complexity of the base station, reducing the overheads of system message update and the paging capacity.

Alternatively, the execution subject of the described steps may be a background processor or other devices with similar processing capabilities, and may also be a machine integrated with an image acquisition device and a data processing device, wherein the image acquisition device may include a graphic collection module such as a camera, and the data processing device may include a terminal such as a computer and a mobile phone, but the present disclosure is not limited thereto.

By means of the described steps, as a base station receives a user location, determines a first tracking area code according to the user location, and sends the first tracking area code to a core network, the registration may be performed on the basis of the user location. The present disclosure may solve the problem in the related art that a terminal may not be paged due to movement of a base station in a non-terrestrial network, thereby achieving the effect of enabling paging of the UE in the non-terrestrial network.

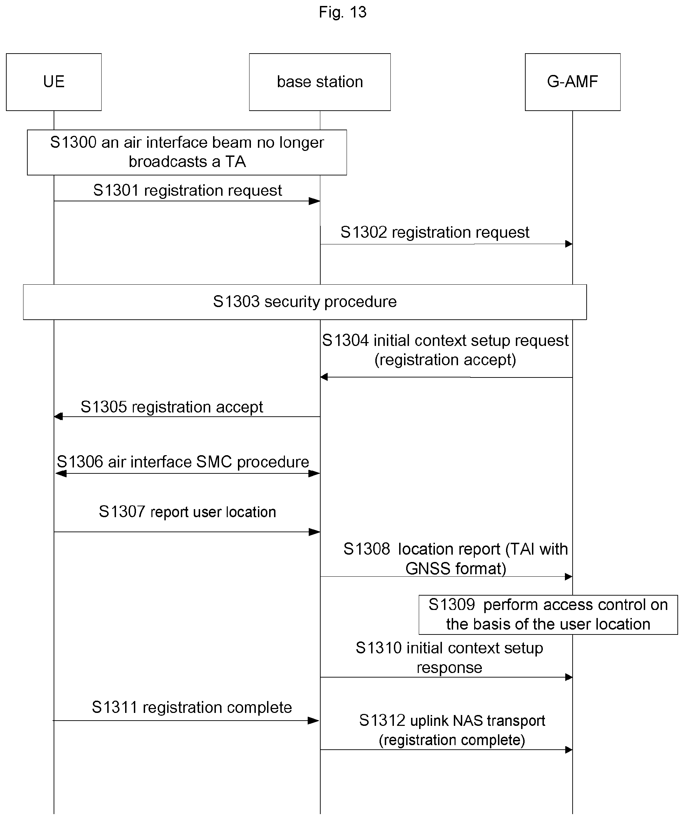

Fig. 13 is a flowchart of registration according to an embodiment of the present disclosure. As shown in Fig. 13, the procedure includes the following steps:
S1300: an air interface beam no longer broadcasts a Tracking Area (TA).

Since a terrestrial base station corresponds to a plurality of TAIs which change continuously as the satellite moves, the TAIs are no longer broadcast, and TAI information in an initial registration request of the UE is invalid. TAC of a User Location Information (ULI) field is set to 0, a user location of a UE is reported after security authentication is performed on an Access Node (AN) subsequently, the user location (longitude and latitude) is converted into bits, and a first TAC is set to a corresponding bit.

S1301: UE sends a registration request to a base station;
S1302: the base station sends a registration request to a General Access and Mobility Management Function (G-AMF);
S1303: the UE, the base station and the G-AMF perform a security procedure;
S1304: the G-AMF sends an initial context setup request (registration accept) to the base station.

After the Non-Access Stratum (NAS) security context is established between the AMF and the UE, the AMF initiates an initial context setup request message to the AN, so as to trigger the base station to establish the context. The message carries a triggering condition for reporting the UE location (i.e. the UE moves out of the target area determined by the registration update threshold), and the registration update threshold DELTA (movement radius) is issued to the UE by means of the TAI list.

S1305: the base station sends registration accept to the UE;
S1306: the UE interacts with the base station to perform an air interface Security Mode Command (SMC) procedure;
S1307: the UE reports a user location to the base station;
S1308: the base station reports the user location to the G-AMF, and the base station converts the user location (longitude and latitude obtained by Global Navigation Satellite System (GNSS) positioning) into bits, and sets the first tracking area code as a corresponding bit (i.e. a TAI with a GNSS format);
S1309: the G-AMF performs access control on the basis of the user location;
S1310: the base station sends an initial context setup response to the G-AMF;
S1311: the UE sends registration complete to the base station;
S1312: the base station transmits uplink NAS transport to the G-AMF, completing the registration.

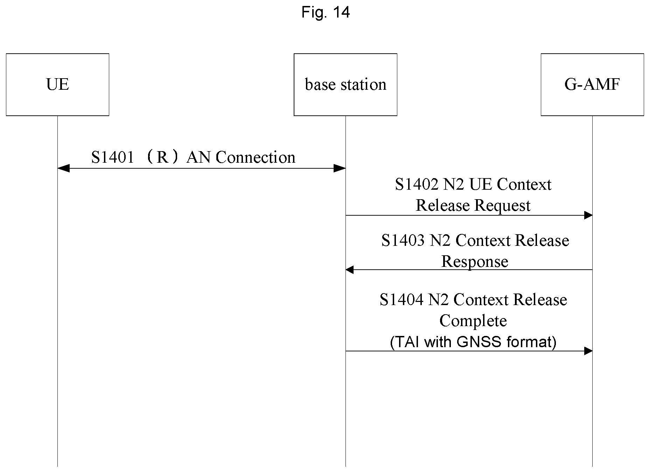

The connection release procedure for the base station in a non-terrestrial network is different from that in a terrestrial network, and the base station needs to report a latest location of a user to the AMF. Fig. 14 is a flowchart of connection release according to an embodiment of the present disclosure. The procedure includes the following steps:
S1401: a UE interacts with a base station to perform (R)AN connection release, wherein the AN connection release refers to release or disconnection of a connection between an Access Network (AN) and the UE.

S1402: the base station sends an N2 user context release request to a G-AMF;
S1403: the G-AMF sends an N2 user context release response to the base station;
S1404: the base station sends N2 user context release complete to the G-AMF. The N2 user context release complete includes a TAI. As the base station side manages a correlation between UEs and tracking area codes as shown in Fig. 7 (the first tracking area code is a tracking area code of any UE in the correlation between UEs and tracking area codes managed by the base station side), the first tracking area code carries the user location of the UE (longitude and latitude obtained by GNSS positioning). The base station reports, by means of the TAI, the user location to the core network by filling bits converted from the user location in the first tracking area code of the TAI (corresponding to the TAI with a GNSS format in the Fig. 14).

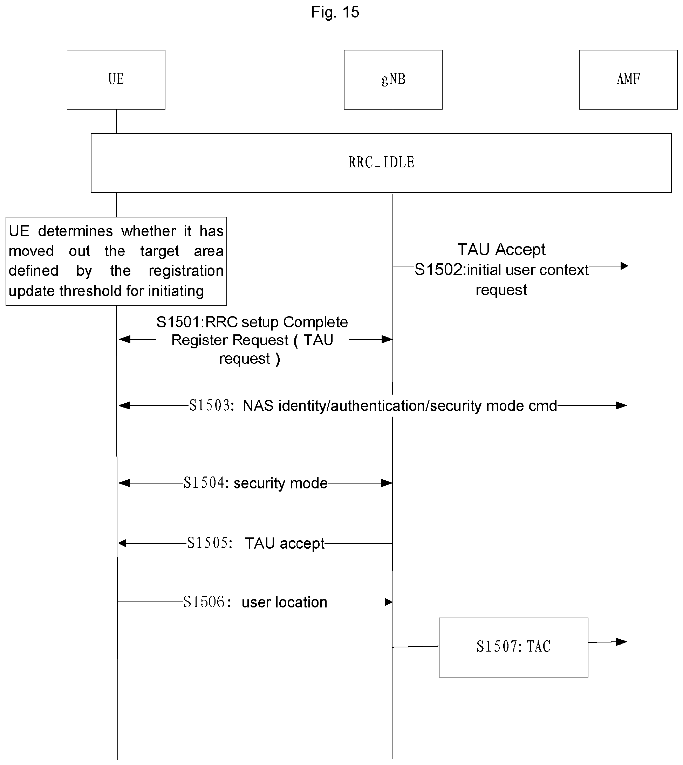

The UE determines whether it has moved out the target area defined by the registration update threshold (DELTA) for initiating a TAU, and in a case where it has moved out the target area defined by DELTA, the UE initiates a TAU and registration update is performed on the basis of the reported latest user location. Fig. 15 is a flowchart of registration update based on a user location according to an embodiment of the present disclosure, including the following steps:
S1501: UE establishes a Radio Resource Control (RRC) connection with a base station, and carries a TAU request in a registration request, wherein the registration request uses an MSG5 format (MSG5 is a message format (Master Information Block (MIB) Sub-block 5)) used for broadcasting information in a 5G NR system;
S1502: the base station sends an initial user context request to a core network, wherein the initial user context request carries a TAU request;
S1503: the core network establishes a security procedure with the UE, including: Network Access Stratum (NAS) identity/authentication/security mode;
S1504: the base station establishes a security mode with the UE;
S1505: the core network issues a TAU accept message;
S1506: the UE sends a user location to the base station;
S1507: the base station converts the location of the UE into a first Tracking Area Code (TAC) and sends same to the core network.

The order of S1505 and S1506 is not strictly enforced and may be interchanged.

By adopting a UE location-based registration procedure mechanism, the present disclosure solves the problem of registration in a regenerative mode of a satellite-borne base station in a satellite network. A registration update procedure is triggered in a case where the UE location exceeds DELTA set by the network. This avoids frequent signaling interactions and also facilitates user paging by the network.

From the description of the described embodiments, a person skilled in the art may clearly understand that the methods according to the described embodiments may be implemented by software and a necessary universal hardware platform, and definitely may also be implemented by hardware. However, in many cases, the former is a preferred implementation. Based on such understanding, the technical solutions of the present disclosure essentially or the part contributing to the prior art may be embodied in the form of a software product. The computer software product is stored in a storage medium (such as a ROM/RAM, a magnetic disk, or an optical disk), and includes several instructions for causing a terminal device (which may be a mobile phone, a computer, a server, or a network device) to execute the methods described in the embodiments of the present disclosure.

Further provided in the present embodiment is an apparatus for updating a user location. The apparatus is configured to implement the described embodiments and preferred implementations, and what has been described will not be elaborated. The term "module", as used hereinafter, is a combination of software and/or hardware capable of realizing a predetermined function. Although the apparatus described in the following embodiment is preferably implemented by software, implementation by hardware or a combination of software and hardware is also possible and conceived.

According to another embodiment of the present disclosure, provided is a system for registering a user. The system includes: a user equipment, which is configured to send a user location to a base station in a case where a preset condition is satisfied; and a base station, which is configured to determine a first tracking area code according to the user location, and send the first tracking area code to a core network.

**In** an exemplary embodiment, the base station is configured to determine a first bit according to latitude of the user location, and determine a second bit according to longitude of the user location; wherein the first tracking area code includes: the first bit and the second bit.

**In** an exemplary embodiment, the base station is configured to determine a third bit according to orientation of the user location, wherein the first tracking area code further includes the third bit.

**In** an exemplary embodiment, the base station is configured to send the first tracking area code to the core network in a case of releasing of a connection with the base station.

**In** an exemplary embodiment, the user equipment is further configured to send the user location to the base station during registration with a core network, or send the user location to the base station in a case of moving out of a target area.

**In** an exemplary embodiment, the user equipment is further configured to, before sending the user location to the base station in a case of moving out of a target area, acquire a registration update threshold from the core network, and determine the target area according to the registration update threshold.

**In** an exemplary embodiment, the user equipment is further configured to determine the target area as an area with the user location as a center and the registration update threshold as a radius.

**In** an exemplary embodiment, the user equipment is further configured to receive a tracking area identity list from the core network, and acquire the registration update threshold from the tracking area identity list, wherein the registration update threshold is carried in a second tracking area code of the tracking area identity list.

**It** should be noted that the described various module may be implemented by software or hardware. The latter may be implemented in the following manner, but is not limited thereto: all the modules are located in the same processor; or the various modules are located in different processors in arbitrary combinations.

The embodiments of the present disclosure further provide a computer-readable storage medium. The computer-readable storage medium stores a computer program, wherein the computer program implements the steps of the method according to any one of the described embodiments when being executed by a processor.

**In** an exemplary embodiment, the computer-readable storage medium may include, but is not limited to, any medium that may store a computer program, such as a USB flash disk, a Read-Only Memory (ROM), a Random Access Memory (RAM), a mobile hard disk, a magnetic disk, or an optical disk.

The embodiments of the present disclosure further provide an electronic device. The electronic device includes a memory and a processor, wherein the memory stores a computer program, and the processor is configured to run the computer program so as to execute the steps in any of the described method embodiments.

**In** an exemplary embodiment, the electronic device may further include a transmission device and an input/output device, wherein the transmission device is connected to the processor, and the input/output device is connected to the processor.

For specific examples in this embodiment, reference may be made to the examples described in the described embodiments and exemplary implementations, and details are not repeatedly described in this embodiment.

The embodiments of the present disclosure further provide a computer program product. The computer program product includes a computer program which, when executed by a processor, implements the steps of the method in the embodiments of the present disclosure.

Obviously, those skilled in the art should understand that various modules or various steps of the present disclosure may be implemented by a universal computing apparatus, and the various modules or steps may be integrated on a single computing apparatus or distributed over a network formed by a plurality of computing apparatuses, and may be implemented by program codes executable by the computing apparatus, so that the modules or steps may be stored in a storage apparatus and executed by the computing apparatus, and the shown or described steps may be executed in sequences different from those described here in some cases, or the various modules or steps can be implemented by manufacturing the modules or steps into various integrated circuit modules respectively, or manufacturing multiple modules or steps among the various modules or steps into a single integrated circuit module. Thus, the present disclosure is not limited to any particular combination of hardware and software.

The foregoing descriptions are merely preferred embodiments of the present disclosure, and are not intended to limit the present disclosure. For those skilled in the art, the present disclosure may have various modifications and variations. Any modifications, equivalent replacements, improvements and the like made within the principle of the present disclosure shall belong to the scope of protection of the present disclosure.

## Claims

1. A method for registering a user, applied to a base station, comprising:
receiving a user location;
determining a first tracking area code according to the user location; and
sending the first tracking area code to a core network.

2. The method according to claim 1, wherein the determining a first tracking area code according to the user location comprises:
determining a first bit according to latitude of the user location; and
determining a second bit according to longitude of the user location;
wherein the first tracking area code comprises: the first bit and the second bit.

3. The method according to claim 1 or 2, wherein the determining a first tracking area code according to the user location further comprises:
determining a third bit according to orientation of the user location, wherein the first tracking area code further comprises the third bit.

4. The method according to any one of claims 1 to 3, wherein the sending the first tracking area code to a core network comprises:
in a case of releasing of a connection with the base station, sending the first tracking area code to the core network.

5. A method for registering a user, applied to user equipment, comprising:
sending a user location to a base station in a case where a preset condition is satisfied;
wherein the user location is used to determine a first tracking area code.

6. The method according to claim 5, wherein the sending a user location to a base station in a case where a preset condition is satisfied comprises:
sending the user location to the base station during registration with a core network; or
sending the user location to the base station in a case of moving out of a target area.

7. The method according to claim 6, wherein before the sending the user location to the base station in a case of moving out of a target area, the method further comprises:
acquiring a registration update threshold from the core network; and
determining the target area according to the registration update threshold.

8. The method according to claim 7, wherein the determining the target area according to the registration update threshold comprises:
determining the target area as an area with the user location as a center and the registration update threshold as a radius.

9. The method according to claim 7 or 8, wherein the acquiring a registration update threshold from the core network comprises:
receiving a tracking area identity list from the core network; and
acquiring the registration update threshold from the tracking area identity list, wherein the registration update threshold is carried in a second tracking area code of the tracking area identity list.

10. A system for registering a user, comprising:
user equipment, which is configured to send a user location to a base station in a case where a preset condition is satisfied; and
a base station, which is configured to determine a first tracking area code according to the user location, and send the first tracking area code to a core network.

11. A computer-readable storage medium, the computer-readable storage medium storing a computer program, wherein the computer program implements the steps of the method according to any one of claims 1 to 4, or 5 to 9 when being executed by a processor.

12. An electronic device, comprising a memory and a processor, wherein the memory stores a computer program, and the processor is configured to run the computer program so as to execute the method according to any one of claims 1 to 4, or 5 to 9.

13. A computer program product, comprising a computer program which, when executed by a processor, implements the steps of the method according to any one of claims 1 to 4, or 5 to 9.
